# FASCICULE DE BREVET EUROPEEN

(11) **EP 1 805 081 B1**
(45) Date de publication et mention de la délivrance du brevet: **30.07.2008**
(21) Numéro de dépôt: 05810737.6
(22) Date de dépôt: 14.10.2005
(51) Int. Cl.: B64G 1/22

(54) **DISPOSITIF DE COMMANDE DU DEPLOIEMENT DE STRUCTURES GONFLABLES**
VORRICHTUNG ZUM STEUERN DER ENTFALTUNG VON AUFBLASBAREN STRUKTUREN
DEVICE FOR CONTROLLING THE DEPLOYMENT OF INFLATABLE STRUCTURES

(30) Priorité: 29.10.2004 FR 0452487
(43) Date de publication de la demande: 11.07.2007
(73) Titulaire: ASTRIUM SAS, 75016 Paris (FR)
(72) Inventeur: GAUTRIAS, Cyril, F-31500 TOULOUSE (FR); PEYPOUDAT, Vincent, F-78630 MORAINVILLIERS (FR); LACOUR, Dominique, F-33370 TRESSES (FR); DEFOORT, Brigitte, F-33160 SAINT MEDARD EN JALLES (FR)
(74) Mandataire: Schmit, Christian Norbert Marie
(86) Numéro de dépôt international: PCT/FR2005/050856
(87) Numéro de publication internationale: WO 2006/048565

(56) Documents cités:
- CADOGAN D P ET AL: "AIAA Paper 99-1075 Inflatable Solar Array Technology" AIAA AEROSPACE SCIENCES MEETING, XX, XX, 1999, pages 1-8, XP002288756 cité dans la demande
- TSUNODA H ET AL: "AIAA Paper 2003-1979 Deployment Method of Space Inflatable Structures using Folding crease Patterns" AIAA STRUCTURES, STRUCTURAL DYNAMICS, AND MATERIALS CONFERENCE, 2003, pages 5285-5291, XP009043111

## Description

La présente invention se rapporte à un système de déploiement par gonflage d'une structure gonflable et à un dispositif de commande du déploiement de structures dans l'espace et plus particulièrement de déploiement par gonflage.

De façon générale, lorsque l'on envoie des objets dans l'espace, on dispose d'une place réduite sous les coiffes des fusées ou dans la soute des navettes. On doit alors compacter ces objets, et on devra les déployer lors de leur arrivée en orbite. L'exemple le plus connu de telles structures est celui des panneaux solaires.

Ces déploiements sont faits habituellement à l'aide de systèmes mécaniques qui peuvent être complexes, compte tenu des conditions difficiles de l'environnement spatial, mais on a également développé des systèmes de déploiement par gonflage, potentiellement plus légers, moins volumineux et moins coûteux.

Toutefois, ces systèmes ne sont pas encore opérationnels en raison de difficultés techniques qui ne sont pas encore pleinement résolues dont les principales peuvent se résumer ainsi :
- il faut maîtriser le déploiement pour qu'il se fasse selon la géométrie souhaitée ;
- il faut, après déploiement, rigidifier la structure par une autre solution que le maintien sous pression, ce dernier n'étant pas pérenne dans l'espace compte tenu des risques de fuite dus à l'environnement ;
- il faut assurer que le déploiement se fait avec une régularité suffisante, compatible avec les systèmes entraînés et compte tenu de la situation en apesanteur.

L'invention vise plus particulièrement les systèmes de déploiement par gonflage d'une structure formée d'une enveloppe tubulaire souple, stockée avant déploiement par pliage de type accordéon, déployée in situ, puis rigidifiée.

Cette technologie connue met en oeuvre d'une manière générale un tube gonflable replié axialement sur un mandrin constitué d'une base, d'un tube axial et d'une partie supérieure. La partie supérieure du mandrin comporte un composant déformable qui appuie sur l'intérieur du tube gonflable de façon à créer une certaine résistance au déploiement. Le gaz de gonflage est introduit au sommet du mandrin en sorte que seule la partie déployée du tube est mise sous pression. Le principe d'un tel système est décrit par exemple dans l'article d' « American Institute of Aeronautics and Astronautics » intitulé « Inflatable solar array technology » AIAA-99-1075.

Une variante décrite dans le document "Deployment control Mechanism for Inflatable Space Structures" de la 33^{ème} conférence "AEROSPACE MECHANISMS CONFERENCE" de Mai 1999 concerne un tube souple accordéon dont les crètes externes annulaires sont prolongées vers l'intérieur par des parois formant diaphragme.

La présente invention vise à perfectionner ce type de système de déploiement en particulier sur les points suivants :
meilleur contrôle du déploiement à la fois sur la régularité et sur la direction du déploiement ;
limitation de la masse.

A cet effet, l'invention a pour objet un système de déploiement pas gonflage d'une structure gonflable du type comprenant, à l'état non-déployé, un tube souple plié en accordéon et solidaire à une extrémité d'un bouchon muni d'une arrivée de gaz de gonflage l'autre extrémité du tube étant fermée le système comprenant un dispositif de commande du déploiement de la structure gonflable comportant des moyens de contrôle du passage du tube de l'état plié à l'état déployé, disposés à l'intérieur du tube, caractérisé en ce que lesdits moyens de contrôle du passage du tube plié à l'état déployé sont constitués, d'une part, d'un jeu de lames souples solidaires entre elles et disposées en pétales radialement à un premier mât coaxial audit tube plié, ledit jeu étant monté mobile le long du mât, et, d'autre part, de moyens de rappel dudit jeu de pétales en direction du bouchon en sorte de presser la partie pliée du tube de façon constante de façon à ce que chaque pétale s'applique de façon sensiblement identique voire toujours identique sur une série de plis superposés de ladite partie pliée du tube ce qui permet un déploiement régulier du tube gonflable par un effort de libération des plis régulier tout au long du déploiement.

Suivant une autre caractéristique du dispositif de l'invention lesdits moyens de guidage sont constitués d'un guide circulaire disposé perpendiculairement à l'axe du tube plié et fixé à un mât. Le mat est, selon une première variante, le mât coaxial audit tube plié et fixé audit bouchon, et, suivant une seconde variante est un second mât externe au tube plié, le guide circulaire étant conformé en cerceau.

Seon une caractéristique complémentaire, l'arrivée de gaz de gonflage est agencée de façon à introduire ledit gaz à l'intérieur de ladite partie pliée du tube.

Un tel dispositif de déploiement du tube assure un déploiement régulier, sûr et sans à-coups grâce à l'accompagnement du déploiement de chaque pli du tube par un pétale souple qui s'efface progressivement et revient en arrière lorsque le pli accompagné s'échappe au terme de son dépliage, pour s'appliquer sur le pli suivant de manière identique et ainsi de suite jusqu'au déploiement total du tube.

On va maintenant décrire plus en détail des modes de réalisation du dispositif de l'invention en se reportant aux dessins annexés sur lesquels :
- Figure 1 est une vue de principe d'un système connu de déploiement par gonflage d'une structure formée d'un tube souple stocké à l'état plié ;
- Figure 2 représente le système de la figure 1 au début du déploiement du tube ;
- Figures 3A et 3B sont des vues en coupe axiale d'un dispositif selon l'invention ;
- Figure 4 est une vue de dessus suivant la flèche IV du dispositif des figures 3A et 3B ;
- Figure 5 est une vue analogue à celle de la figure 4 mais pour un mode de pliage en accordéon du tube du type hexagonal ;
- Figure 6 illustre le principe de pliage tétragonal ;
- Figure 7 représente en vue de dessus un tube plié en mode tétragonal ;
- Figure 8 représente le même tube plié en mode hexagonal ;
- Figure 9 représente un tube déployé, préalablement plié en mode tétragonal ;
- Figures 10a et 10b représentent une variante de réalisation des moyens de rappel des pétales de contrôle du déploiement du tube, dans deux états de fonctionnement ;
- Figures 11 et 12 sont des courbes illustrant les particularités des modes de pliage, respectivement à quatre et six côtés, et
- Figure 13 représente un mode de réalisation préféré des pétales de contrôle du déploiement du tube.

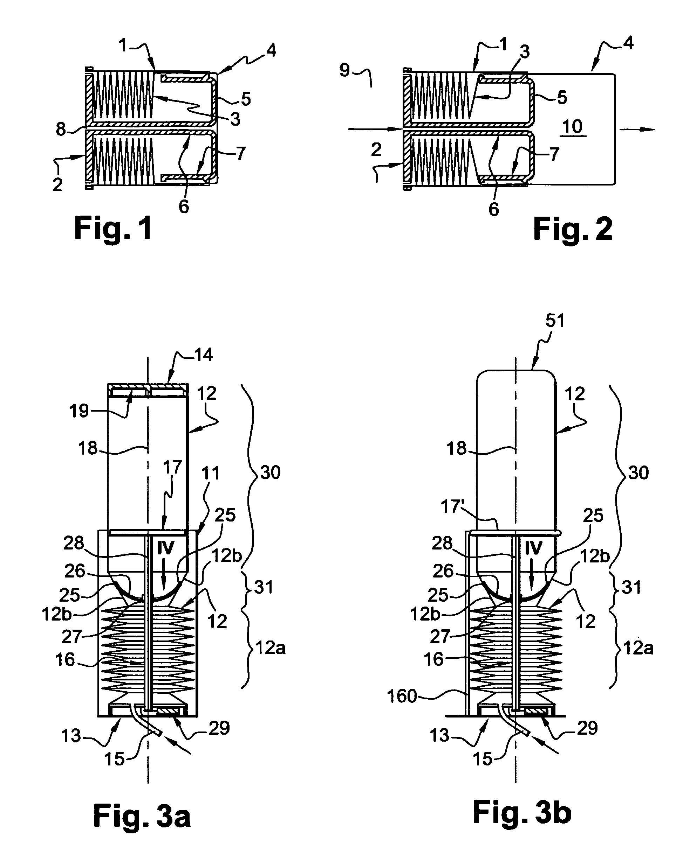

Sur les figures 1 et 2, on a représenté schématiquement un système connu de déploiement par gonflage destiné à la mise en place de structures spatiales.

Ce système comprend, à l'état plié (figure 1), une enveloppe externe tubulaire rigide 1, solidaire à sa base d'un bouchon 2 et enfermant un tube souple 3 plié par exemple en accordéon, dont une extrémité est solidaire du bouchon 2 et dont l'autre extrémité 4 est fermée sur elle-même en recouvrant un guide circulaire 5 d'axe confondu avec celui de l'enveloppe 1.

Le guide 5 est solidaire d'un mât central creux 6 et comporte un retour interne en forme de jupe cylindrique 7, s'étendant à l'intérieur du tube 3 et sur lequel passe le tube 3 lorsqu'il est déployé (figure 2).

Le bouchon 2 est muni d'un orifice 8 d'introduction d'air de gonflage 9 qui traverse le mât creux 6 pour déboucher dans l'espace 10 entre le guide 5 et l'extrémité fermée 4 du tube 3 qui se déploie sur toute sa longueur coaxialement à l'enveloppe rigide 1.

Ces systèmes ne sont pas totalement satisfaisants aux plans de la fiabilité, de la régularité et de la précision du déploiement comme il a été rappelé plus haut, ce notamment du fait que le montage mécanique est fixe et ne descend pas au fur et à mesure du dépliage.

Pour y remédier, il est proposé le dispositif illustré schématiquement en figures 3A et 3B lequel comprend un tube souple 12 replié en accordéon, fixé à une première extrémité, à un premier bouchon 13, à son autre extrémité, à un second bouchon 14 selon la figure 3A. Sur la figure 3A le bouchon 14 est représenté à distance de la partie en accordéon, le tube 12 ayant commencé à se déployer, la partie avancée du tube étant dépliée.

Sur la figure 3B, l'extrémité 51 dépourvue de bouchon est elle aussi à distance, le tube ayant commencé à se déployer.

Le bouchon 13 est muni d'une arrivée 15 de gaz de gonflage directement à l'intérieur du tube plié 12, à son extrémité inférieure.

Sur le dispositif représenté en figure 3A, le tube plié est enfermé dans une enveloppe externe tubulaire et rigide schématisée en 11, le premier bouchon 13 étant lui-même fixé à l'enveloppe 11. Une telle enveloppe ainsi que le bouchon 14 ne sont pas essentiels à l'invention, le tube gonflable pouvant, lorsqu'aucun risque de dégradation n'est à craindre, rester en position plié sans protection comme dans le cas de l'exemple de la figure 3B.

Selon cette même figure 3A, coaxialement au tube plié, est fixé sur le bouchon 13 un mât creux 16, à l'extrémité duquel est disposé un guide circulaire 17, formé d'un disque ou d'un anneau perpendiculaire à l'axe 18 de l'ensemble 11, 12, 13, 14, 16.

Le guide 17 est à hauteur de l'extrémité supérieure de l'enveloppe 11. Le second bouchon 14, dans le mode de réalisation représenté, est muni sur sa face inférieure d'un creux 19 dans lequel vient s'encastrer le guide 17 lorsque le système est complètement plié et fermé.

La variante de la figure 3B représente un dispositif selon l'invention dépourvu d'enveloppe, de bouchon 14 et comportant un dispositif de guide externe 17' solidaire d'un mat externe 160.

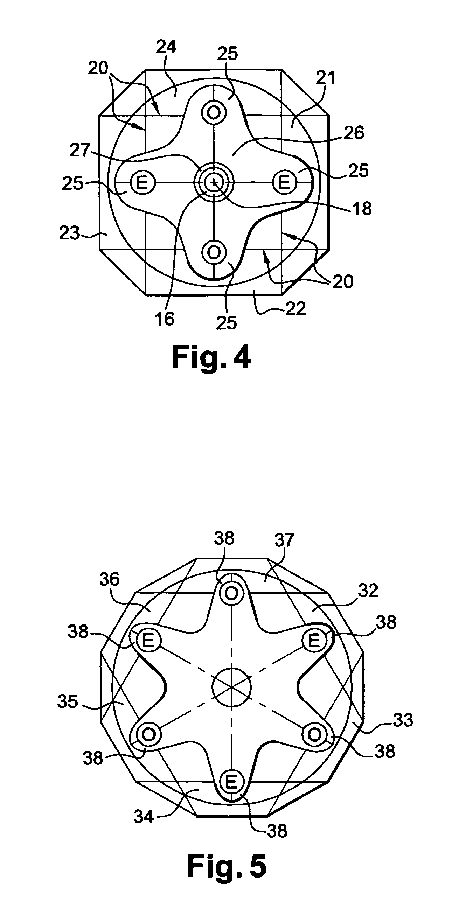

Selon les deux variantes, le tube 12 est plié en suivant un mode dit tétragonal comme illustré en figure 4. Ce mode de pliage forme des empilements réguliers de plis définissant un espace central parallélépipédique d'axe 18, à quatre côtés représentés en 20 sur la figure 4. En 21, 22, 23 et 24 respectivement, sont désignés les quatre empilements verticaux des plis de la partie pliée 12a du tube (figure 3A).

Dans le dispositif des figures 3A et 3B, au dessus de chaque empilement 21 à 24 de la partie pliée 12a est disposée une lame souple 25, les quatre lames 25 rayonnant comme des pétales autour du mât 16, en étant reliés entre eux par une zone de liaison annulaire 26 (figure 4), elle-même solidaire d'un manchon 27 monté coulissant le long du mât 16.

Le manchon 27 est relié à un câble 28 disposé à l'intérieur du mât 16 et lui-même relié à un dispositif 29 agencé dans le bouchon 13 apte à exercer sur le câble 28 une force de rappel déterminée en sorte de rabattre constamment les pétales souples 25 contre la face supérieure des empilements 21 à 24.

Le mât 16 est rainuré axialement pour permettre la liaison entre le câble 28 et le manchon 27 ainsi que le coulissement de ce dernier le long du mât lors du déploiement du tube 12.

Dans le cas de la variante de la figure 3B, le mat 16 interne est conservé pour permettre le coulissement du manchon 27 et le fonctionnement du dispositif à lames souples 25. Un arrêt du dispositif à lames souples peut remplacer le guide 17 sur le mât 16.

De plus, des moyens (non représentés) sont prévus pour caler angulairement le manchon 27 sur le mât 16, c'est-à-dire empêcher sa rotation afin que les pétales 25 demeurent en regard des empilements 21 à 24.

Les pétales 25 sont de préférence centrés sur les empilements 21 à 24.

Le fonctionnement du dispositif est le suivant.

Au repos selon la variante de la figure 3A, le tube 12 étant complètement plié, l'extrémité 19 du tube comportant éventuellement le bouchon 14 chapeaute le guide 17, et les pétales 25 sont sensiblement à l'horizontale sur les plis 12a, plaqués contre ces derniers sous la force de rappel du dispositif 29.

Selon la variante de la figure 3B, l'extrémité distale 51 du tube repose directement sur le dispositif à lames souples qui se trouve alors en haut du mat 16 à peu près au niveau du guide externe 17'.

L'envoi d'un gaz sous pression par le conduit 15 à l'intérieur du tube plié 12 provoque l'éloignement de l'extrémité 19, 51 de l'enveloppe comme illustré par les figures 3A et 3B en contraignant le tube à se déployer autour du guide fixe 17 ou à l'intérieur du guide fixe 17', ce qui provoque le déploiement successif des plis (21 à 24). Chaque couche de plis se soulève tels les plis représentés en 12b sur la figure 3A, à l'encontre de la pression exercée par les pétales.

C'est d'abord la première paire de plis opposés 22 et 24 en considérant le mode de pliage de la figure 4 qui va se soulever et cintrer la paire de pétales 25 en regard, puis, la seconde paire de plis 21 et 23 sera prise en charge par l'autre paire de pétales opposés et ainsi de suite.

Ainsi, au fur et à mesure que la traction exercée par le gonflement de la partie 30 du tube s'accroît, les pétales 25 se soulèvent suivant le rythme alterné indiqué ci-dessus, à l'encontre de la force de rappel du dispositif 29 jusqu'à ce que lesdits plis 12b échappent aux pétales. A ce moment, les pétales 25 retombent élastiquement sous l'action conjuguée de leur élasticité propre et du rappel du dispositif 29 pour se plaquer contre la couche suivante de plis 21 à 24.

Le cycle de relevage des pétales 25 freinant l'ascension des plis se déroule jusqu'au dernier pli au voisinage du bouchon 13.

Un contrôle progressif régulier et sans à-coups est ainsi assuré du déploiement des plis successifs du tube 12, avec un réajustement continu du dispositif à pétales 25 à 26 qui va progressivement descendre le long du mât 27 pour être constamment au niveau de la couche de plis du dessus du reste du tube plié, repéré en 12a sur les figures 3A et 3B, la zone 31 étant la zone de dépliage des plis.

La figure 5 représente suivant une vue analogue à celle de la figure 4 un autre mode de pliage également connu en soi, dénommé hexagonal et qui peut également être retenu pour le pliage du tube 12.

Ce mode de pliage définit six empilements de plis respectivement 32 à 37, imposant ainsi autant de pétales 38 de formes analogues à celles de la figure 4 mais plus étroites ou effilées, le reste du dispositif de déploiement étant identique à celui des figures 3, 4. Dans ce mode de pliage les plis se déploient trois par trois, à savoir les plis 32, 34, 36, puis les plis 33, 35, 37 et ainsi de suite.

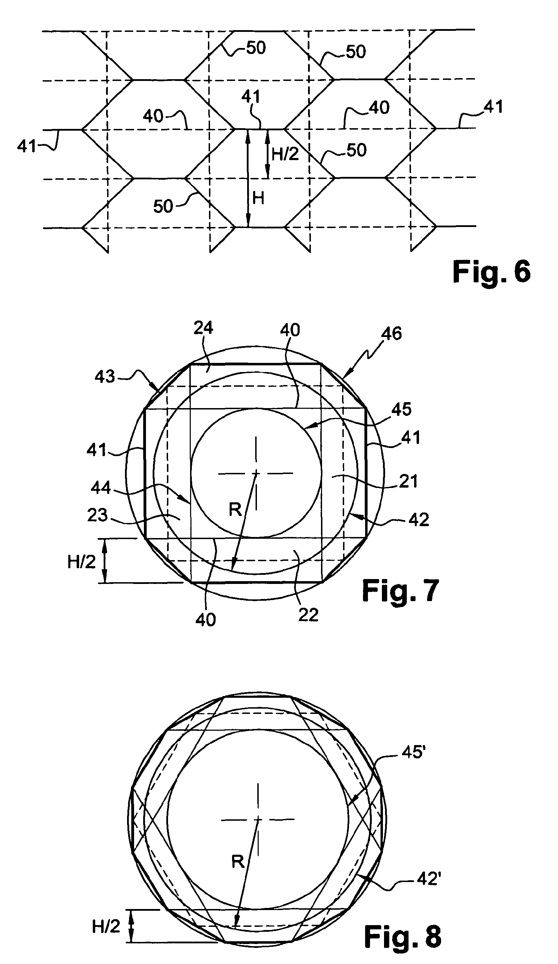

La figure 6 illustre le principe de pliage du mode tétragonal qui est le mode préféré pour le dispositif de l'invention comme on va l'expliquer plus loin.

Sur la figure 6, on a représenté en 40 une arête de creux de pliage que l'on retrouve sur le pliage tétragonal vu de dessus de la figure 7. En 41 est représentée une arête de sommet de pliage. Deux arêtes 40 et deux arêtes 41 font un tour complet du tube. En 50 est repérée une ligne de pliage en zig-zag.

En 42 sur la figure 7 est représenté le cercle du tube déployé avec son rayon R et H/2 est la demi-hauteur dite de pliage, également représentée sur la figure 6. En 43 est le bord extérieur (octogonal) du pliage, en 44 est le bord intérieur (carré), en 45 le cercle intérieur tangent aux quatre empilements 21 à 24 de plis et en 46 le cercle extérieur circonscrivant l'ensemble du pliage.

La figure 8 est une vue analogue à celle de la figure 7 avec un pliage de type hexagonal avec son cercle intérieur 45' et le cercle de tube déployé 42'.

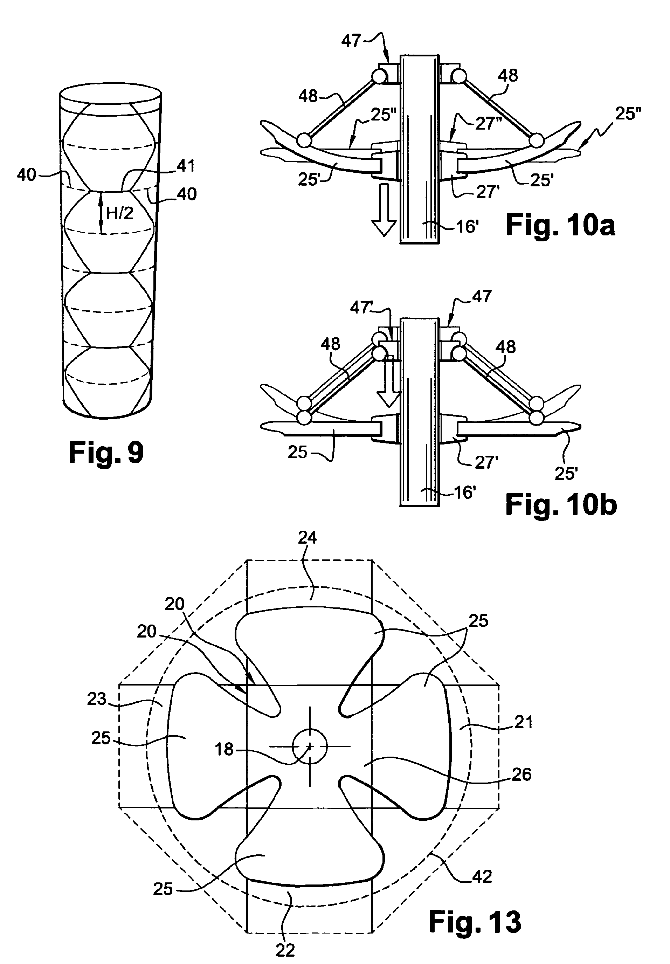

La figure 9 représente un tube déployé sur lequel figure le schéma de pliage, du type tétragonal selon la figure 6.

Les figures 10a et 10b représentent une variante de réalisation des moyens de rappel des pétales du dispositif de déploiement des figures 3A et 3B.

Sur les figures 10a, 10b, on a représenté un mât 16' analogue au mât 16 en 25' et 27' des pétales et un manchon de déplacement des pétales analogues aux pétales 25 et manchon 27 de la figure 1.

Les pétales 25' sont reliés au voisinage de leur extrémité à un collier 47 par l'intermédiaire de biellettes 48. Le collier 47 est monté coulissant sur le mât 16', au dessus du manchon 27' mais un dispositif à cliquet (non représenté) autorise uniquement la descente du collier le long du mât.

De même, le manchon 27' est monté coulissant sur le mât 16', mais un dispositif à cliquet (non représenté) autorise uniquement la descente le long du mât.

Par ailleurs, des moyens (non représentés) sont prévus pour empêcher toute rotation des éléments 27' et 47 autour du mât 16' en sorte que les pétales 25' demeurent constamment en regard des empilements de plis 21 à 24 (voir figure 4).

Le dispositif constitué du câble 28 et du rappel 29 de la figure 3A est bien entendu supprimé dans ce mode de réalisation.

Le fonctionnement de ce dispositif est le suivant.

En position de repos, les pétales sont à l'horizontale (position 25", figure 10a) et le manchon est en position 27".

Dès que le tube commence à se déployer, les premiers plis (21 à 24) commencent à soulever les pétales (position 25', figure 10a).

Par réaction d'arc-boutement des biellettes 48 sur le collier 47 qui ne peut remonter le long du mat 16', les pétales se cintrent et poussent vers le bas le manchon (position 27', figure 10a) qui se déplace de quelques millimètres. Lorsque les pétales sont libérés par les plis déployés, ils reprennent leur position à l'horizontale (position 25', figure 10b) et sont plaqués contre la deuxième couche de plis par le dispositif de rappel. Ce faisant, ils abaissent par les biellettes 48 le collier 47 qui vient en position 47' (figure 10b) correspondant à un positionnement à l'horizontale des pétales 25' de la figure 10b.

Ce cycle de déplacement automatique de l'ensemble pétales-biellettes 48-collier 47 se répète ensuite pour chaque couche de plis, en sorte que ledit ensemble reste constamment en contact avec le dessus des piles de plis au fur et à mesure du raccourcissement de la partie pliée 31 (figures 3A et 3B) lors du déploiement du tube.

Ce dispositif s'adapte à toute longueur du tube plié et est compatible avec une large gamme de diamètre de tube.

La force de rappel exercée sur les pétales dépend de la souplesse des pétales. A titre d'exemple les pétales (25, 25', 38) sont en un matériau composite réalisé à partir de plis de préimprégné "Hexcel-Hexply 664M10", pour un tube (12) de 160mm déployé sous une pression relative de 0,25 bar, le tube étant constitué de 3 couches, une de « Kapton » de 50µm, une en préimprégné verre/résine de 300 µm et la troisième en « Kapton » de 50 µm.

Le poids de ce dispositif est le même quelle que soit la longueur du tube plié. Enfin, ce dispositif est totalement contenu dans le volume intérieur du tube plié et présente un encombrement minimal, réduit au seul diamètre du mât 16' dans l'espace central du pliage de la zone 31.

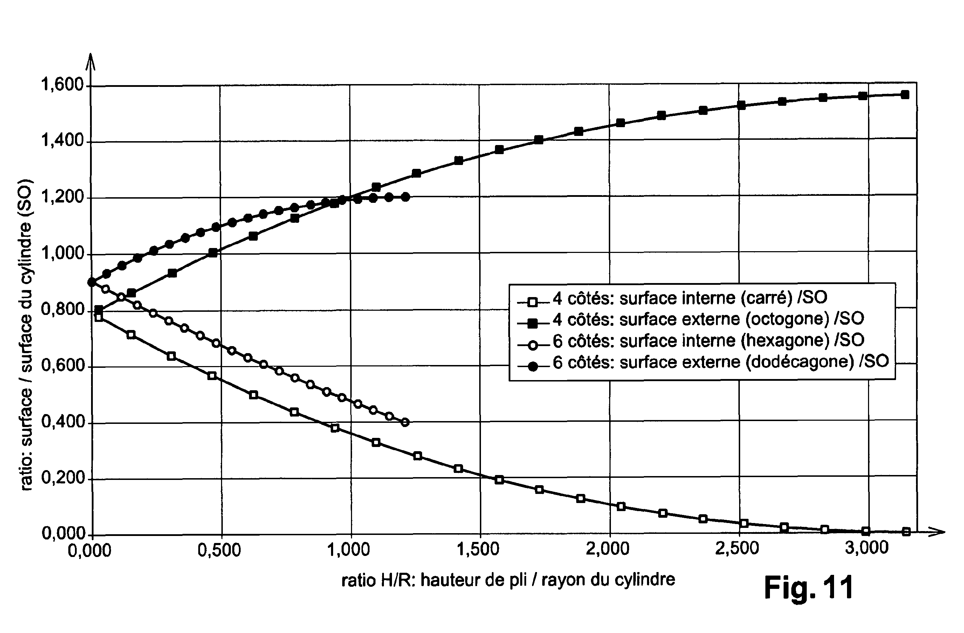

La figure 11 représente des courbes illustrant les particularités respectives des deux modes de pliage, tétragonal et hexagonal. En abscisse est porté le rapport H/R et en ordonnée le rapport surface (interne/externe)/surface du cylindre (tube 12).

Les courbes montrent :
- qu'il y a une moindre longueur de plis pour le mode tétragonal en ce qui concerne les plis 40 + 41, indépendante du ratio HR.
- que la longueur des plis 50 est identique en mode tétragonal et en hexagonal, mais que plus H/R est grand, plus ce pli 50 est court.

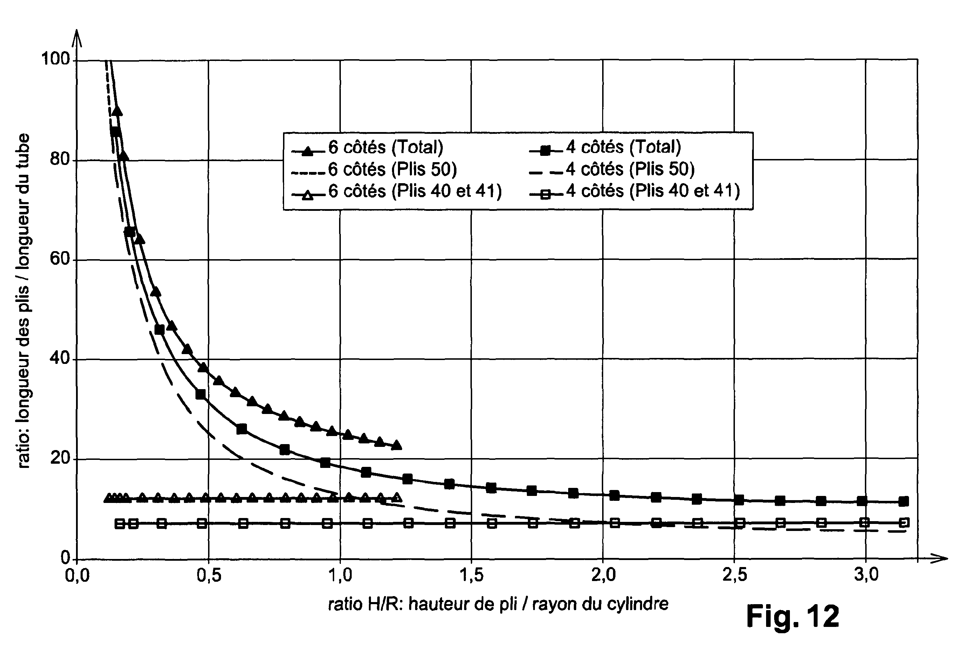

La figure 12 représente également des courbes illustrant d'autres particularités desdits modes de pliage tétragonal et hexagonal. En abscisse est porté le rapport H/R et en ordonnée le rapport longueur des plis (40, 41, 50)/longueur du tube 12.

La figure montre les rapports entre la surface externe et la surface du tube déplié en partie haute et la surface vide au centre par rapport à cette surface dépliée en partie basse. On constate en ce qui concerne l'hexagone qu'il y a un rapport H/R maximum, vers 1, 2, peu efficace, tandis qu'en tétragonal, plus H/R est grand, plus le trou central (45, 45') est petit. D'où ici encore le choix du pliage tétragonal, et le choix de la valeur optimale à 1,6 du ratio H/R, le rapport hauteur de pliage (H) sur rayon R du tube déployé étant, pour ce mode de pliage tétragonal, dans la plage 1,5-2,1. Ce dernier choix est lié au fait que si le trou central est trop petit, les divers plis sont en contact entre eux et se frottent, ce qui complique le déploiement et peut détériorer le tube.

La figure 13 est une vue analogue à celle de la figure 4 illustrant un mode de réalisation préféré des quatre pétales dans le mode de pliage tétragonal.

Les pétales 25 sont préférentiellement conformés en pétales de trèfle, c'est-à-dire allant en s'élargissant au fur et à mesure de l'éloignement de l'axe 18 en sorte de maximiser la surface de contact entre les pétales et les empilements 21 à 24, à l'intérieur du cercle 42 du tube déployé.

Il est enfin à noter que le dispositif des figures 3A et 3B est simplement un exemple explicatif et que le dispositif de l'invention peut ne pas comporter de guide.

## Revendications

1. Système de déploiement par gonflage d'une structure gonflable du type comprenant, à l'état non-déployé, un tube souple (12) plié en accordéon et solidaire à une extrémité d'un bouchon (13) muni d'une arrivée de gaz de gonflage (15) l'autre extrémité du tube étant fermée, le système comprenant un dispositif de commande du déploiement de la structure gonflable, comportant des moyens (25 à 29) de contrôle du passage du tube de l'état plié (12a) à l'état déployé (30), disposés à l'intérieur du tube (12), **caractérisé en ce que** lesdits moyens de contrôle du passage du tube plié à l'état déployé sont constitués, d'une part, d'un jeu de lames souples (25) solidaires entre elles et disposées en pétales radialement à un premier mât (16) coaxial audit tube plié (12a), ledit jeu étant monté mobile le long du mât, et, d'autre part, de moyens (28, 29) de rappel dudit jeu de pétales (25) en direction du bouchon (13) en sorte de presser la partie pliée (12a) du tube, chaque pétale (25) s'appliquant sur une série de plis superposés (21 à 24) de ladite partie pliée du tube.

2. Système selon la revendication 1 **caractérisé en ce que** le dispositif comporte des moyens de guidage constitués d'un guide circulaire (17, 17') disposé perpendiculairement à l'axe (18) du tube plié (12a).

3. Système selon la revendication 2 **caractérisé en ce que** le guide circulaire est fixé au premier mât (16) et fixé audit bouchon (13)

4. Système selon la revendication 2 **caractérisé en ce que** le guide circulaire est fixé à un second mât (160) externe au tube plié (12a).

5. Système suivant l'une quelconque des revendications précédentes, **caractérisé en ce que** lesdits moyens de rappel dudit jeu de pétales (25) sont constitués d'un manchon (27) coulissant extérieurement le long du premier mât (16) et sur lequel sont fixés lesdits pétales (25), d'un dispositif de rappel (29) solidaire dudit bouchon (13) et d'un câble (28) reliant le dispositif de rappel (29) audit manchon (27), ledit premier mât (16) étant agencé en sorte de permettre le coulissement dudit manchon et son blocage en rotation autour du mât (16).

6. Système suivant l'une quelconque des revendications 1 à 4, **caractérisé en ce que** lesdits moyens de rappel dudit jeu de pétales (25') sont constitués d'un manchon (27') coulissant extérieurement audit premier mât (16') et sur lequel sont fixés lesdits pétales (25'), d'un collier (47) coulissant le long dudit premier mât (16') disposé au dessus dudit manchon (27'), de biellettes (48) reliant lesdits pétales (25') audit collier (47), des moyens étant prévus pour ne permettre le coulissement desdits manchon (27') et collier (47) qu'en direction de la partie pliée (12a) du tube et pour interdire leur rotation autour du mât (16').

7. Système suivant l'une quelconque des revendications précédentes, **caractérisé en ce que** le tube (12) est plié suivant un mode de pliage tétragonal, lesdits pétales (25, 25') étant au nombre de quatre en regard des quatre empilements (21 à 24) de plis (12a) du tube et reliés à une partie annulaire commune (26).

8. Système suivant l'une quelconque des revendications précédentes, **caractérisé en ce que** les pétales (25) ont une forme de pétales de trèfle allant en s'élargissant au fur et à mesure de l'éloignement du centre (18).

9. Système suivant la revendication 7, **caractérisé en ce que** le mode de pliage tétragonal est tel que le rapport hauteur de pliage (H) sur rayon (R) du tube déployé est dans la plage 1,5 - 2,1.

10. Système suivant la revendication 9, **caractérisé en ce que** ledit rapport H/R est de 1,6.

11. Système suivant l'une quelconque des revendications précédentes, **caractérisé en ce que** ladite arrivée de gaz de gonflage (15) est agencée de façon à introduire ledit gaz à l'intérieur dudit tube plié (12a).

## Claims

1. A system for the deployment by inflation of an inflatable structure of the type comprising, in the non-deployed state, a flexible tube (12) folded in a concertina and secured at an end to a plug (13) provided with an inflation gas inlet (15), the other end of the tube being closed, the system comprising a device for controlling the deployment of the inflatable structure, comprising means (25 to 29) for controlling the passage of the tube from the folded state (12a) to the deployed state (30), disposed inside the tube (12), **characterised in that** said means of controlling the passage of the folded tube to the deployed state comprises firstly a set of flexible blades (25) secured to one another and disposed in petals radially to a first mast (16) coaxial with said folded tube (12a), said set being mounted so as to be able to move along the mast, and secondly means (28, 29) of returning said set of petals (25) in the direction of the plug (13) so as to press the folded part (12a) of the tube, each petal (25) being applied to a series of superposed folds (21 to 24) of said folded part of the tube.

2. A system according to claim 1, **characterised in that** the device comprises guide means comprising a circular guide (17, 17') disposed perpendicular to the axis (18) of the folded tube (12a).

3. A system according to claim 2, **characterised in that** the circular guide is fixed to the first mast (16) and fixed to said plug (13).

4. A system according to claim 2, **characterised in that** the circular guide is fixed to a second mast (160) external to the folded tube (12a).

5. A system according to any one of the preceding claims, **characterised in that** said means of returning said set of petals (25) comprises a sleeve (27) sliding externally along the first mast (16) and to which said petals (25) are fixed, a return device (29) secured to said plug (13) and a cable (29) connecting the return device (29) to said sleeve (27), said first mast (16) being arranged so as to allow the sliding of said sleeve and its rotational locking about the mast (16).

6. A system according to any one of claims 1 to 4, **characterised in that** said means of returning said set of petals (25') comprises a sleeve (27') sliding externally to said first mast (16') and to which said petals (25') are fixed, a collar (47) sliding along said first mast (16') disposed above said sleeve (27'), connecting rods (48) connecting said petals (25') to said collar (47), means being provided so as not to permit the sliding of said sleeve (27') and collar (47) except in the direction of the folded part (12a) of the tube and so as to prevent their rotation about the mast (16').

7. A system according to any one of the preceding claims, **characterised in that** the tube (12) is folded according to a tetragonal folding mode, said petals (25, 25') being four in number opposite four stacks (21 to 24) of folds (12a) of the tube and connected to a common annular part (26).

8. A system according any one of the preceding claims, **characterised in that** the petals (25) are in the form of trefoil petals broadening as they move away from the centre (18).

9. A system according to claim 7, **characterised in that** the tetragonal folding mode is such that the ratio of the folding height (H) to the radius (R) of the deployed tube is in the range 1.5-2.1.

10. A system according to claim 9, **characterised in that** said H/R ratio is 1.6.

11. A system according to any one of the preceding claims, **characterised in that** said inflation gas inlet (15) is arranged so as to introduce said gas inside said folded tube (12a).

## Patentansprüche

1. System zur Entfaltung durch Aufblasen einer aufblasbaren Struktur von dem Typ, der im nicht entfalteten Zustand eine nachgiebige Röhre (12) umfasst, welche zu einem Akkordeon gefaltet ist und an einem Ende mit einem Pfropfen (13) verbunden ist, welcher mit einem Zugang von Aufblasgas (15) versehen ist, wobei das andere Ende der Röhre geschlossen ist, und wobei das System eine Steuerungsvorrichtung zur Entfaltung der aufblasbaren Struktur umfasst, welche Mittel (25 bis 29) zur Steuerung des Übergangs der Röhre vom gefalteten Zustand (12a) in den entfalteten Zustand (30) umfasst, welche im Inneren der Röhre (12) angeordnet sind, **gekennzeichnet dadurch, dass** die Mittel zur Steuerung des Übergangs der gefalteten Röhre in den entfalteten Zustand zum einen aus einem Satz von nachgiebigen Klingen (25), welche miteinander verbunden sind und wie Blütenblätter radial an einem Mast (16) angeordnet sind, der koaxial zu der besagten gefalteten Röhre (12a) verläuft, wobei der besagte Satz beweglich entlang des Mastes montiert ist und zum anderen aus Mitteln (28, 29) zur Rückstellung des besagten Satzes von Blütenblättern (25) in Richtung des Pfropfens (13) derart, dass der gefaltete Teil (12a) der Röhre gepresst wird, wobei jedes Blütenblatt (25) auf eine Serie von übereinander liegenden Falten (21 bis 24) des besagten gefalteten Teils der Röhre aufliegt, bestehen.

2. System gemäß des Anspruchs 1, **gekennzeichnet dadurch, dass** die Vorrichtung Mittel zur Führung umfasst, welche aus einer kreisförmigen Führung (17, 17') bestehen, welche senkrecht zur Achse (18) der gefalteten Röhre (12a) angeordnet ist.

3. System gemäß dem Anspruch 2, **gekennzeichnet dadurch, dass** die kreisförmige Führung an dem ersten Mast (16) fixiert und an dem besagten Pfropfen (13) fixiert ist.

4. System gemäß dem Anspruch 2, **gekennzeichnet dadurch, dass** die kreisförmige Führung an einem zweiten Mast (160) fixiert ist, welcher außerhalb der gefalteten Röhre (12a) angeordnet ist.

5. System gemäß einem Beliebigen der vorangegangenen Ansprüche, **gekennzeichnet dadurch, dass** die besagten Mittel zur Rückstellung des besagten Satzes von Blütenblättern (25) aus einer Muffe (27), welche außerhalb entlang des ersten Mastes (16) schiebbar ist und auf welcher die besagten Blütenblätter (25) fixiert sind, aus einer Vorrichtung zur Rückstellung (29), welche mit dem besagten Pfropfen (13) verbunden ist, und aus einem Kabel (28), welches die Vorrichtung zur Rückstellung (29) mit der besagten Muffe (27) verbindet, ,bestehen wobei der erste Mast (16) derart angeordnet ist, um die Verschiebung der besagten Muffe und sein Blockieren der Rotation um den Mast (16) zu ermöglichen.

6. System gemäß einem Beliebigen der Ansprüche 1 bis 4, **gekennzeichnet dadurch, dass** die Mittel zur Rückstellung des Satzes von Blütenblättern (25') aus einer Muffe (27'), welche außerhalb des besagten ersten Mastes (16') verschiebbar ist, und auf welche die besagten Blütenblätter (25') fixiert sind, aus einer Kabelschelle (47), welche entlang des besagten ersten Mastes (16') verschiebbar ist, welche über der besagten Muffe (27') angeordnet ist, aus Schaltgestänge (48), welche die besagten Blütenblätter (25') mit der besagten Kabelschelle (47) verbindet, aus Mitteln bestehen, die dafür vorgesehen sind, um das Verschieben der besagten Muffe (27') und Kabelschelle (47) nur in Richtung des gefalteten Teils (12a) der Röhre zu ermöglichen und um ihre Rotation um den Mast (16') zu verhindern.

7. System gemäß einem Beliebigen der vorangegangenen Ansprüche, **gekennzeichnet dadurch, dass** die Röhre (12) gemäß eines tetragonalen Faltungsmodus gefaltet wird, wobei die besagten Blütenblätter (25, 25') vier sind und vier Stapeln (21 bis 24) von Falten (12a) der Röhre zugewandt und mit einem gemeinsamen ringförmigen Teil verbunden sind (26).

8. System gemäß einem Beliebigen der vorangegangenen Ansprüche, **gekennzeichnet dadurch, dass** die Blütenblätter (25) die Form von Kleeblütenblättern haben, welche sich bei zunehmender Entfernung vom Zentrum (18) verbreitern.

9. System gemäß des Anspruchs 7, **gekennzeichnet dadurch, dass** der tetragonale Faltungsmodus derart ist, dass das Verhältnis zwischen der Höhe der Faltung (H) und dem Radius (R) der entfalteten Röhre zwischen 1,5 - 2,1 liegt.

10. System gemäß dem Anspruch 9, **gekennzeichnet dadurch, dass** das besagte Verhältnis H/R 1,6 ist.

11. System gemäß einem Beliebigen der vorangegangenen Ansprüche, **gekennzeichnet dadurch, dass** die Zufuhr von Aufblasgas (15) derart angeordnet ist, dass das Gas ins Innere der gefalteten Röhre (12a) eingelassen wird.
